# EUROPÄISCHE PATENTSCHRIFT

(11) **EP 0 553 757 B1**
(45) Veröffentlichungstag und Bekanntmachung des Hinweises auf die Patenterteilung: **25.09.1996**
(21) Anmeldenummer: 93101116.7
(22) Anmeldetag: 26.01.1993
(51) Int. Cl.: C08F 4/602, C08F 10/00

(54) **Katalysator und Verfahren zur Polymerisation und Copolymerisation von Olefinen**
Catalyst and process for polymerisation and copolymerisation of olefins
Catalyseur et procédé de polymérisation ou copolymérisation d'oléfines

(30) Priorität: 27.01.1992 DE 4202163
(43) Veröffentlichungstag der Anmeldung: 04.08.1993
(73) Patentinhaber: HOECHST AKTIENGESELLSCHAFT, 65926 Frankfurt am Main (DE)
(72) Erfinder: Winter, Andreas, Dr., W-6246 Glashütten/Ts. (DE); Dolle, Volker, Dr., W-6140 Bensheim (DE); Spaleck, Walter, Dr., W-6237 Liederbach (DE)

(56) Entgegenhaltungen:
- EP-A- 0 314 797
- EP-A- 0 459 264
- JOURNAL OF POLYMER SCIENCE/ PART A: POLYMER CHEMISTRY Bd. 26, Oktober 1988, NEW YORK, USA Seiten 3089 - 3102 J.C.W. CHIEN ET AL. 'Metallocene-Methylaluminoxane Catalysts for Olefin Polymerisation. I. Trimethylaluminum as Coactivator.'

## Beschreibung

Die vorliegende Erfindung bezieht sich in erster Linie auf ein Katalysatorsystem zur Olefinpolymerisation, das aus einem Metallocen und mindestens zwei verschiedenen Aluminiumverbindungen als Cokatalysator besteht.

Katalysatoren auf der Basis von löslichen Metallocenverbindungen in Kombination mit oligomeren Aluminoxanen sind bekannt. Mit diesen Systemen können Ethylen, Propylen und auch höhere Olefine polymerisiert werden (vgl. EP-A 185 918; J. Am. Chem. Soc. 109 (1987) 6544).

Auch Polyolefinwachse und Polyolefine hoher Stereoregularität lassen sich mit Hilfe von Metallocen/Aluminoxan-Katalysatorsystemen herstellen (EP-A 321 852, EP-A 387 690).

Allen diesen Verfahren ist gemeinsam, daß als Cokatalysator ein Aluminoxan verwendet wird. Diese Aluminiumverbindung ist teuer und schwierig in der Herstellung. Darüberhinaus werden in der Polymerisation größere Mengen benötigt, da das Verhältnis Al/Metallocen zur Erzielung befriedigender Metallocenaktivitäten größer als 1000, teilweise größer als 10 000 sein sollte. Der Restaschegehalt im gebildeten Polymeren ist somit entsprechend hoch und muß durch kostenintensive Reinigungsschritte aufwendig entfernt werden.

Es besteht daher Interesse, die erforderliche Aluminoxanmenge zu reduzieren oder das Aluminoxan durch andere Cokatalysatoren zu ersetzen. Die bisherigen Lösungsansätze sind jedoch alle unbefriedigend.

So führt der vollständige Ersatz von Methylaluminoxan (MAO) durch die doppelte Menge Trimethylaluminium in Kombination mit Ethylen bis(indenyl) ZrCl₂ als Metallocen und Propylen als Olefin zu einem Rückgang der Polymerisationsaktivität von 10 kg PP/g Metallocen x h auf 63 g PP/g Metallocen x h (0,6 %) (Macromolecules, 23 (1990) 4489).

Gemäß Adv. Organomet. Chem. 18 (1980) 99 können Zirkonocen/Trialkylaluminium-Systeme Propen nicht polymerisieren. Auch gegenüber Ethylen sind solche Katalysatoren inaktiv oder nur sehr schwach aktiv.

Geringere Desaktivierungseffekte bei dem Ersatz von MAO durch Trimethylaluminium wurden im System Cp₂ZrCl₂/Eihylen beobachtet. Ein solches System kann jedoch prochirale Olefine wie etwa Propen nicht zu isotaktischen oder syndiotaktischen Polymeren polymerisieren. Es würde lediglich ataktisches Polymeres gebildet, das nur von geringem Interesse ist.

In J. Polym. Sci., Part A, Pol. Chem., 29 (1991) 459 wird die Polymerisation von Propen mit rac-Ethylen (1-indenyl)₂-ZrCl₂ in Gegenwart von MAO und Mischungen von MAO und Trimethylaluminium beschrieben. Der völlige oder teilweise Ersatz von MAO durch Trimethylaluminium führt dort ebenfalls zu deutlichen Abnahmen oder zum Verlust der Polymerisationsaktivität.

Aus J. Polymer Science-Part. A: Chemistry 26 (1988) Oct., Nr. 11 New York, USA ist die Ethylenpolymerisation mit einem Cp₂ZrCl₂-Methylaluminoxankatalysator bekannt, in dem Aluminoxan teilweise durch Trimethylaluminium ersetzt wird. Bei TMA/MAO ≤ 10 wird kein Aktivitätsverlust festgestellt.

Aus EP-A-459 264 ist die Herstellung von syndiotaktischen Polyolefinen durch Polymerisation mit einem asymmetrischen Metallocen und einem Aluminoxan bekannt. Dabei wird das Aluminoxan teilweise durch einen Trialkylaluminium ersetzt.

Aus EP-A-314 797 ist ein Olefinpolymerisationsverfahren in Anwesenheit eines Katalysatorsystems bekannt, das ein Metallocen ein Aluminoxan und eine Alkoxy- oder Siloxyorganoaluminiumverbindung enthält.

Die Aufgabe, die mit der vorliegenden Erfindung gelöst wird, bestand somit darin, ein Katalysatorsystem bzw. ein Verfahren zur Olefinpolymerisation zu finden, bei dem bei vertretbarem Aktivitätsverlust die Menge an Cokatalysator, insbesondere an MAO, reduziert werden kann.

Die Erfindung betrifft ein Katalysatorsystem zur Olefinpolymerisation oder -copolymerisation, bestehend aus
mindestens einem Metallocen als Übergangsmetallverbindung einem Cokatalysator 1 und
einem Cokatalysator 2 besteht,
wobei der Cokatalysator 1 aus
mindestens einer Verbindung der Formel II 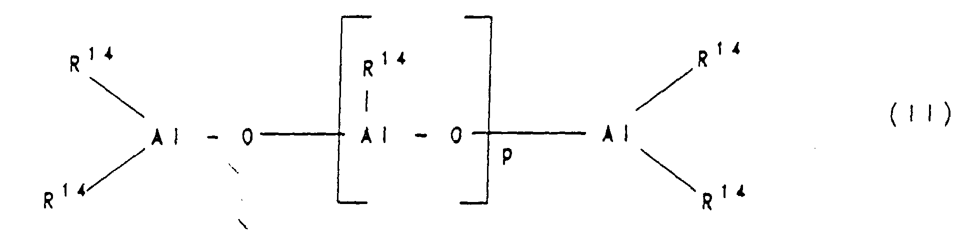 und/oder der Formel (III), 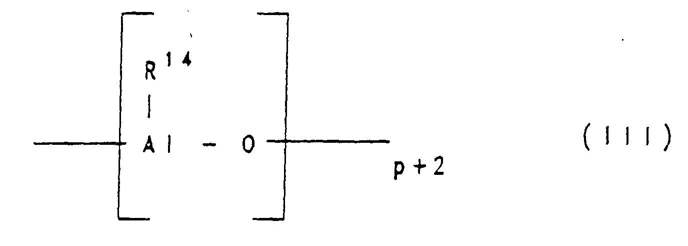 wobei in den Formeln II und III die Reste R¹⁴ gleich oder verschieden sein können und eine C₁-C₆-Alkylgruppe, eine C₆-C₁₈-Arylgruppe, Benzyl oder Wasserstoff bedeuten, und p eine ganze Zahl von 2 bis 50 bedeutet,
oder aus mindestens einer Verbindung der Formel IV besteht 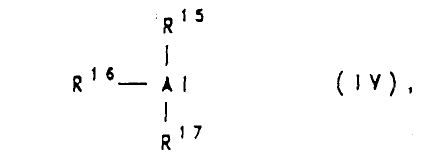 wobei R¹⁵, R¹⁶ und R¹⁷ gleich oder verschieden sind und ein Wasserstoffatom. eine C₁-C₁₀-Alkylgruppe, eine C₁-C₁₅-Alkylsilylgruppe, eine C₆-C₁₀-Arylgruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
und der Cokatalysator 2
aus mindestens einer Verbindung der Formel II und/oder der Formel III und/oder aus mindestens mindestens einer Verbindung der Formel IV besteht, wobei das Katalysatorsystem mindestens eine Verbindung der Formel II und/ oder III und mindestens eine Verbindung der Formel IV enthält und der Cokatalysator 2 vor der Polymerisationsreaktion mit dem Metallocen in Kontakt gebracht wird.

Das erfindungsgemäße Katalysatorsystem enthält bevorzugt eine Verbindung der Formel II und/oder III in Kombination mit einer Verbindung der Formel IV. Weiterhin wird bevorzugt ein Metallocen eingesetzt.

Bei dem oder den Metallocen(en), die Bestandteil des erfindungsgemäßen Katalysatorsystems sind, handelt es sich um die Verbindungen der Formeln I und Ia 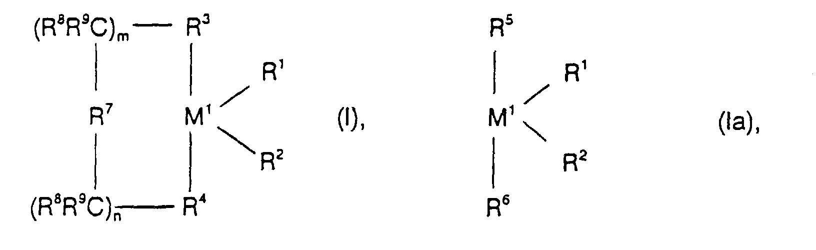 worin
- M¹: ein Metall der Gruppe IVb, Vb oder VIb des Periodensystems ist,
- R¹ und R²: gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxgruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
- R³ bis R⁶: gleich oder verschieden sind und einen ein- oder mehrkernigen Kohlenwasserstoffrest, welcher mit dem Zentralatom M¹ eine Sandwichstruktur bilden kann, bedeuten,
- R⁷: 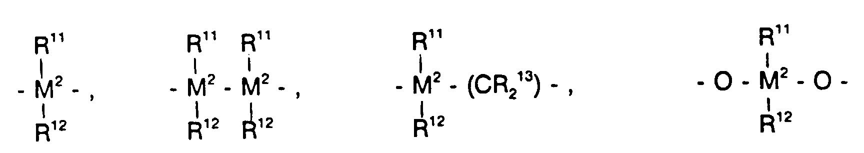 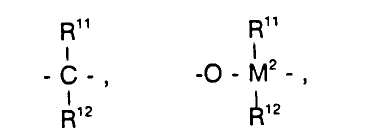
=BR¹¹, =AlR¹¹, -Ge-, -Sn-, -O-, -S-, =SO, SO₂, =NR¹¹, =CO,
=PR¹¹ oder =P(O)R¹¹ ist,
wobei
- R¹¹, R¹² und R¹³: gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
- M²: Silizium, Germanium oder Zinn ist,
- R⁸ und R⁹: gleich oder verschieden sind und die für R¹¹ genannte Bedeutung haben und
- m und n: gleich oder verschieden sind und null, 1 oder 2 sind, wobei m plus n null, 1 oder 2 ist; insbesondere um die in den Ausführungsbeispielen genannten Metallocene.

In den Verbindungen I - IV steht Alkyl für geradkettiges oder verzweigtes Alkyl. Halogen (halogeniert) bedeutet Fluor, Chlor, Brom oder Jod, bevorzugt Fluor oder Chlor.

In den Formeln I und Ia ist M¹ ein Metall der Gruppe IVb, Vb oder VIb des Periodensystems, beispielsweise Titan, Zirkon, Hafnium, Vanadium, Niob, Tantal, Chrom, Molybdän, Wolfram, vorzugsweise Zirkon, Hafnium und Titan.

R¹ und R² sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.

R³ bis R⁶ sind gleich oder verschieden und bedeuten bevorzugt Cyclopentadienyl, Indenyl oder Fluorenyl. Diese Reste können noch zusätzliche Substituenten tragen. Beispiele für solche substituierten Reste R³ bis R⁶ sind Dialkylcyclopentadienyl, Trialkylcyclopentadienyl, Alkylindenyl, Dialkylindenyl, Trialkylindenyl, Alkyltetrahydroindenyl oder benzokondensierte Indenyle.
R⁷ ist 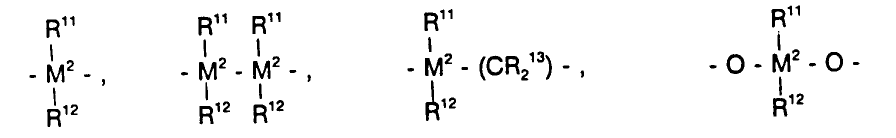 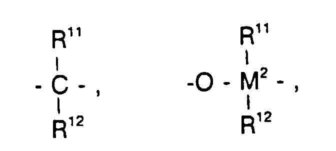 = BR¹¹, =AIR¹¹, -Ge-, -Sn-, -O-, -S-, =SO, =SO₂, =NR¹¹, =CO,
=PR¹¹ oder =P(O)R¹¹, wobei R¹¹, R¹² und R¹³ gleich oder verschieden sind und ein Wasserstoffatom, ein Halogenatom, eine C₁-C₁₀-, vorzugsweise C₁-C₄-Alkylgruppe, insbesondere Methylgruppe, eine C₁-C₁₀-Fluoralkylgruppe, vorzugsweise CF₃-Gruppe, eine C₆-C₁₀-, vorzugsweise C₆-C₈-Arylgruppe, eine C₆-C₁₀-Fluorarylgruppe, vorzugsweise Pentafluorphenylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹¹ und R¹² oder R¹¹ und R¹³ bilden jeweils zusammen mit den sie verbindenden Atomen einen Ring.

M² ist Silizium, Germanium oder Zinn, bevorzugt Silizium und Germanium.

R⁷ ist vorzugsweise =CR¹¹R¹², =SiR¹¹R¹², =GeR¹¹R¹², -O-, -S-, =SO, =PR¹¹ oder =P(O)R¹¹.

R⁸ und R⁹ sind gleich oder verschieden und haben die für R¹¹ genannte Bedeutung.

m und n sind gleich oder verschieden und bedeuten null, 1 oder 2, bevorzugt null oder 1, wobei m plus n null, 1 oder 2, bevorzugt null oder 1 ist.

Die Herstellung dieser Metallocene ist literaturbekannt (vgl. z.B. Journal of Organometallic Chem. 288 (1985) 63; dto, 369 (1989) 343; dto, 369 (1989) 359; Chemistry Letters, (1989) 1853; EP-A 387 690; EP-A 320 762).

Erfindungsgemäß werden zusammen mit dem (oder den) Metallocen(en) Cokatalysatoren verwendet. Es handelt sich dabei um Vertreter zweier Typen von Aluminiumverbindungen.

Typ 1 sind Aluminoxane der Formel (II) und/oder der Formel (III), wobei in den Formeln (II) und (III) die Reste R¹⁴ gleich oder verschieden sein können und eine C₁-C₆-Alkylgruppe, eine C₆-C₁₈-Arylgruppe, Benzyl oder Wasserstoff bedeuten, und p eine ganze Zahl von 2 bis 50, bevorzugt 10 bis 35 bedeutet.

Bevorzugt sind die Reste R¹⁴ gleich und bedeuten Methyl, Isobutyl, Phenyl oder Benzyl, besonders bevorzugt Methyl.

Sind die Reste R¹⁴ unterschiedlich, so sind sie bevorzugt Methyl und Wasserstoff oder alternativ Methyl und Isobutyl, wobei Wasserstoff bzw. Isobutyl bevorzugt zu 0,01 - 40 % (Zahl der Reste R¹⁴) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit veschiedenen Alkylgruppen R¹⁴ werden entsprechend der gewünschten Zusammensetzung zwei verschiedene Aluminiumtrialkyle (AIR₃ + AIR'₃) mit Wasser umgesetzt (vgl. S. Pasynkiewicz, Polyhedron 9 (1990) 429 und EP-A 302 424).

Die genaue Struktur der Aluminoxane II und III ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Typ 2 sind Aluminiumverbindungen der Formel IV (AIR¹⁵R¹⁶R¹⁷), wobei R¹⁵, R¹⁶ und R¹⁷ gleich oder verschieden sind und ein Wasserstoffatom, eine C₁-C₁₀-, vorzugsweise C₁-C₈-Alkylgruppe, eine C₁-C₁₅, vorzugsweise C₁-C₆-Alkylsilylgruppe, eine C₁-C₁₀-, vorzugsweise C₁-C₈-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-

Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe, oder ein Halogenatom, vorzugsweise Chlor oder Fluor.

Besonders bevorzugte Aluminiumverbindungen des Typs 2 sind Trialkylaluminium, Dialkylaluminiumhalogenid, Alkylaluminiumdihalogenid, Dialkylaluminiumhydrid; weiterhin gemischte Aryl/Alkyl-Homologe der obigen Verbindungen, sowie gemischte Alkoxy/Alkyl-, Alkoxy/Aryl-, Aryloxy/Alkyl- und Aryloxy/Aryl-Homologe der obigen Verbindungen; insbesondere die in den Ausführungsbeispielen genannten Verbindungen IV.

Das erfindungsgemäße Katalysatorsystem besteht insbesondere aus Metallocen(en), Cokatalysator 1 und Cokatalysator 2.

Durch die Kombination aus Cokatalysator 1 und 2 muß in jedem Fall sichergestellt sein, daß sowohl mindestens eine Verbindung der Formel II und/oder III (Aluminoxan, Typ 1) als auch mindestens eine Verbindung der Formel IV für die Polymerisation bereitgestellt wird.

Bevorzugt wird dabei eine Verbindung der Formel II und/oder III mit einer Verbindung der Formel IV kombiniert.

Weiterhin wird bevorzugt ein Metallocen I oder la eingesetzt.

Der Cokatalysator 1 besteht aus mindestens einer Aluminiumverbindung des Typs 1 oder aus mindestens einer Verbindung des Typs 2. Der Cokatalysator 1 wird ohne Lösungsmittel, oder gelöst in einem inerten Kohlenwasserstoff verwendet. Kohlenwasserstoff bedeutet ein aliphatischer oder aromatischer Kohlenwasserstoff. Bevorzugt wird Toluol oder Benzin benutzt. Der Cokatalysator 1 in reiner oder gelöster Form wird vor der Polymerisationsreaktion dem flüssigen Monomeren oder dem Suspensionsmedium, das für die Polymerisation verwendet wird, zugegeben.

Die Menge an Cokatalysator 1 beträgt 0,01 bis 100 mmol Aluminiumverbindung, bevorzugt 0,1 bis 10 mmol Aluminiumverbindung, pro dm³ Polymerisationsmedium.

Der Cokatalysator 2 besteht aus mindestens einer Aluminiumverbindung des Typs 1 und/oder aus mindestens einer Verbindung des Typs 2. Der Cokatalysator 2 wird ohne Lösungsmittel oder bevorzugt gelöst oder als Suspension in einem inerten Kohlenwasserstoff verwendet. Es wird ein aliphatischer oder aromatischer Kohlenwasserstoff, bevorzugt Toluol oder Benzin verwendet.

Der Cokatalysator 2 in reiner, suspendierter oder gelöster Form wird vor der Polymerisationsreaktion mit dem Metallocen oder der Metallocenmischung in Kontakt gebracht.
Das Metallocen wird dabei entweder als Feststoff oder gelöst in einem inerten Kohlenwasserstoff, bevorzugt in Benzin oder Toluol, zugegeben. Bevorzugt wird das Metallocen als Feststoff in der Cokatalysator 2-Lösung oder -Suspension aufgelöst. Ist der Cokatalysator 2 ein Feststoff, kann auch dieser Feststoff mit einer Lösung des Metallocens oder der Metallocenmischung in einem Kohlenwasserstoff, bevorzugt in Benzin wie etwa Pentan, Hexan oder Oktan, gemischt werden. Das Lösungsmittel kann entfernt werden und durch einen Kohlenwasserstoff ersetzt werden, in dem sowohl Cokatalysator 2 als auch das Metallocen oder die Metallocenmischung unlöslich sind.
Alternativ wird der Cokatalysator 2 auf einen Träger wie beispielsweise Silikagele, Aluminiumoxide, festes Aluminoxan, andere anorganische Trägermaterialien oder auch auf ein Polyolefinpulver in feinverteilter Form aufgebracht.

Auf diesen geträgerten Cokatalysator 2 wird das Metallocen aufgebracht, indem das gelöste Metallocen mit dem geträgerten Cokatalysator 2 gerührt wird. Das Lösungsmittel wird entfernt und durch einen Kohlenwasserstoff ersetzt, in dem sowohl Cokatalysator 2 als auch das Metallocen unlöslich sind.

Der Cokatalysator 2 wird in einer Menge von 0,01 bis 100 mmol Aluminiumverbindung, bevorzugt 0,1 bis 10 mmol Aluminiumverbindung, pro dm³ Polymerisationsmedium eingesetzt.

Das Metallocen oder die Metallocene wird/werden in einer Konzentration von 10⁻⁸ bis 10⁻³, bevorzugt 10⁻⁷ bis 10⁻⁴, Mol pro dm³ Polymerisationsmedium eingesetzt.

Bevorzugt wird die Kombination Cokatalysator 2/Metallocen in den Reaktor, der bereits das Polymerisationsmedium und den Cokatalysator 1 enthält, eindosiert. Dadurch wird die Polymerisation gestartet.

Im Falle einer kontinuierlichen Polymerisationsführung werden Polymerisationsmedium/Cokatalysator 1 und Metallocen/Cokatalysator 2 kontinuierlich zudosiert.

Das Metallocen wird vor dem Einsatz in der Polymerisationsreaktion mit dem Cokatalysator 2 voraktiviert. Dadurch wird die Polymerisationsaktivität deutlich erhöht und die Kornmorphologie verbessert.

Die Voraktivierungszeit beträgt 1 Minute bis 60 Stunden, vorzugsweise 5 bis 60 Minuten. Man arbeitet bei einer Temperatur von -78 bis 100°C, vorzugsweise 0 bis 70°C.

Das Metallocen kann auch vorpolymerisiert werden. Dazu wird die Kombination Cokatalysator 2/Metallocen mit einem Olefin, bevorzugt das (oder eines der) in der Polymerisation eingesetzte(n) Olefin(e), vor der Zugabe in das Polymerisationssystem in Kontakt gebracht. Man arbeitet dabei bei Temperaturen von -78 bis 100°C, vorzugsweise 0 bis 70°C.

Zur Entfernung von im Olefin vorhandener Katalysatorgifte ist eine Reinigung mit einem Aluminiumalkyl, beispielsweise AlMe₃ oder AlEt₃ vorteilhaft. Diese Reinigung kann sowohl im Polymerisationssystem selbst erfolgen, oder das Olefin wird vor der Zugabe in das Polymerisationssystem mit der Al-Verbindung in Kontakt gebracht und anschließend wieder abgetrennt. Im Sinne möglichst geringer Restaschegehalte im Polymeren wird dabei die Reinigung des Monomers außerhalb des Polymerisationssystems bevorzugt.

Die Polymerisation oder Copolymerisation wird in bekannter Weise in Lösung, in Suspension oder in der Gasphase, kontinuierlich oder diskontinuierlich, ein- oder mehrstufig bei einer Temperatur von -60 bis 200°C, vorzugsweise 30 bis 80°C, durchgeführt. Polymerisiert oder copolymerisiert werden Olefine der Formel R^{a}-CH =CH-R^{b}. In dieser Formel sind R^{a} und R^{b} gleich oder verschieden und bedeuten ein Wasserstoffatom oder einen Alkylrest mit 1 bis 14 C-Atomen. R^{a} und R^{b} können jedoch auch mit den sie verbindenden C-Atomen einen Ring bilden. Beispiele für solche Olefine sind Ethylen, Propylen, 1-Buten, 1-Hexen, 4-Methyl-1-penten, 1-Octen, Norbornen oder Norbornadien. Insbesondere werden Propylen und Ethylen polymerisiert oder copolymerisiert.

Als Molmassenregler wird, falls erforderlich, Wasserstoff zugegeben. Der Gesamtdruck im Polymerisationssystem beträgt 0,5 bis 100 bar. Bevorzugt ist die Polymerisation in dem technisch besonders interessanten Druckbereich von 5 bis 64 bar.

Durch die excellente Wasserstoffregelbarkeit der erfindungsgemäßen Metallocene kann mit einem Metallocen der gesamte Molmassenbereich zwischen hochmolekularem Polyolefin und Wachsen abgedeckt werden.

Die vorliegende Erfindung umfaßt somit auch das oben beschriebene Verfahren zur Polymerisation oder Copolymerisation von Olefinen, welches durch den Einsatz des erfindungsgemäßen Katalysatorsystems gekennzeichnet ist.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Pentan, Hexan, Heptan, Isooctan, Cyclohexan, Methylcyclohexan genannt.

Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Polymerisationsverfahren zeichnet sich dadurch aus, daß teuer und schwierig herzustellendes Aluminoxan durch Kombination von zwei Cokatalysatorsystemen teilweise durch billigere Aluminiumverbindungen ersetzt werden kann. Darüberhinaus ermöglicht das erfindungsgemäße Verfahren zusätzlich noch eine Reduktion der Gesamtaluminiummenge im Polymerisationssystem, was zu einer Reduktion der Restaschegehalte im Polymerprodukt führt.

Die nachfolgenden Beispiele sollen die Erfindung näher erläutern.

Es bedeuten:
- VZ =: Viskositätszahl in cm³/g,
- MAO =: Methylaluminoxan,
- PP =: Polypropylen,
- Me =: Methyl,
- Et =: Ethyl,
- Ph =: Phenyl,
- Flu =: Fluorenyl,
- Cp =: Cyclopentadienyl,
- V =: Vergleichsbeispiel

### Beispiele 1 bis 9 und Vergleichsbeispiele 1 bis 6

Ein trockener 24-dm³-Reaktor wurde mit Propylen gespült und mit 12 dm³ flüssigem Propylen befüllt.
Dann wurden 30 cm³ toluolische Cokatalysator 1-Lösung (vgl. Tabelle 1; mittlerer Oligomerisierungsgrad des Methylaluminoxans war p = 19) zugegeben und der Ansatz bei 30°C 15 Minuten gerührt.
Parallel dazu wurden 5,0 mg rac-Dimethylsilyl(1-indenyl)₂ZrCl₂ in 15 cm³ toluolischer Cokatalysator 2-Lösung (vgl. Tabelle 1; mittlerer Oligomerisierungsgrad des Methylaluminoxans war p = 19) aufgelöst und durch 15-minütiges Stehenlassen voraktiviert.
Die Lösung wurde dann in den Reaktor gegeben, durch Wärmezufuhr auf 70°C aufgeheizt (10°C/min) und das Polymerisationssystem 1 h durch Kühlung bei 70°C gehalten.
Gestoppt wurde die Polymerisation durch Zugabe von 20 Ndm³ CO₂-Gas und Abgasen des überschüssigen Monomeren.
Metallocenaktivitäten und Viskositätszahlen der erhaltenen Polymere siehe Tabelle 1.

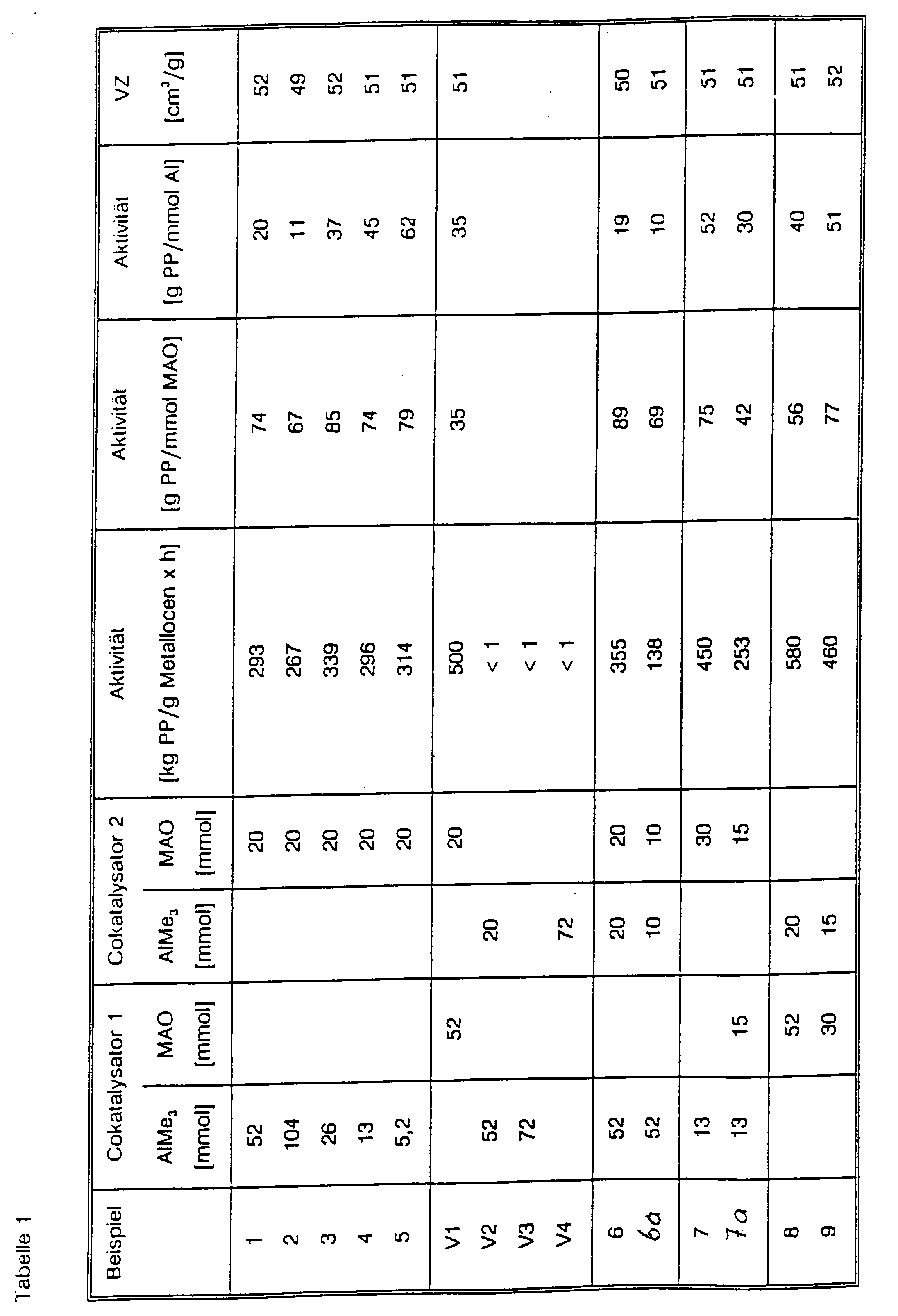

Die Beispiele 1 bis 5 zeigen, daß der Ersatz von MAO als Cokatalysator 1 durch AlMe₃ die Metallocenaktivität zwar reduziert (vgl. Vergleichsbeispiel 1), gleichzeitig kann aber ohne weiteren Ausbeuteverlust die AlMe₃-Menge auf ein Zehntel reduziert werden (Beispiel 1 und-Beispiel 5). Eine Verdopplung der AlMe₃-Menge ist nicht von Vorteil, denn die Aktivität wird dadurch nicht erhöht (Beispiel 1 und Beispiel 2).

Der nicht erfindungsgemäße Ersatz der gesamten MAO-Menge führt zu nahezu inaktiven Polymerisationssystemen (siehe V2 bis V4).

Beispiel 6 zeigt, daß durch zusätzliche Zumischung von AlMe₃ zu Cokatalysator 2 aus Beispiel 1 die Aktivität angehoben werden kann.
Dagegen führt der Ersatz der Hälfte der MAO-Menge von Cokatalysator 2 aus Beispiel 1 in Beispiel 6a zu einer Halbierung der Metallocenaktivität.

Eine Erhöhung der MAO-Menge bei Cokatalysator 2 in Beispiel 7 führt verglichen mit Beispiel 4 zu einer starken Zunahme der Metallocenaktivität.

Dagegen führt die Verteilung der MAO-Menge auf Cokatalysator 1 und 2, die im Beispiel 7a beschrieben ist, im Vergleich zu Beispiel 7 zu einer Abnahme der Metallocenaktivität.

Alternativ zu den Beispielen 1 bis 7, bei denen MAO als Cokatalysator 1 durch AlMe₃ ersetzt wurde, kann MAO erfindungsgemäß alternativ auch im Cokatalysator 2 durch AlMe₃ ersetzt werden. Dies zeigen exemplarisch die Beispiele 8 und 9.

### Beispiele 10 bis 15

Es wurde verfahren wie in Beispiel 1, statt AlMe₃ werden jedoch die in Tabelle 2 aufgeführten Aluminiumverbindungen eingesetzt.

**Tabelle 2**

| Beispiel | Aluminiumverbindung | Aktivität [kg PP/g Metallocen x h] | VZ des Polymers [cm³/g] |
|---|---|---|---|
| 10 | Diethylaluminiumhydrid | 35,5 | 45 |
| 11 | Diethylaluminiumchlorid | 18,9 | 32 |
| 12 | Dimethylaluminiumfluorid | 5,0 | |
| 13 | Ethylaluminiumdichlorid | 3,5 | |
| 14 | Triethylaluminium | 10,1 | |
| 15 | Diethylaluminium-(Vergleichs-Beispiel) (OSiH(Me)(Et)) | 2,5 | |

### Beispiele 16 bis 27

Es wurde verfahren wie in Beispiel 3, statt rac-Dimethylsilyl(1-indenyl)₂ZrCl₂ wurden jedoch die in Tabelle 3 aufgeführten Metallocene verwendet.

**Tabelle 3**

| Beispiel | Metallocen | Aktivität [kg PP/g Metallocen x h] | VZ des Polymers [cm³/g] |
|---|---|---|---|
| 16 | 10 mg Ph₂C(Flu)(Cp)ZrCl₂ | 135 | 392 |
| 17 | 10 mg Me₂C(Flu)(Cp)ZrCl₂ | 99 | 100 |
| 18 | 5 mg rac-Me₂Si(2-Me-1-indenyl)₂ZrCl₂ | 159 | 165 |
| 19 | 10 mg rac-Me₂Si(2-Et-1-indenyl)₂ZrCl₂ | 102 | 145 |
| 20 | 5 mg rac-Me₂Si(2-Me-4,6-i-propyl-1-indenyl)₂ZrCl₂ | 295 | 248 |
| 21 | 10 mg rac-Me₂Si(2,4-dimethyl-1-Cp)₂ZrCl₂ | 205 | 45 |
| 22 | 5 mg rac-Me₂Si(2-Me-4,5-benzo-1-indenyl)₂ZrCl₂ | 272 | 274 |
| 23 | 100 mg rac-Me₂Si(1-indenyl)₂HfCl₂ | 15,5 | 224 |
| 24 | 75 mg rac-Ethylen(1-indenyl)₂HfCl₂ | 19,3 | 149 |
| 25 | 25 mg rac-Me₂Si(2,3,5-trimethyl-1-Cp)₂ZrCl₂ | 60 | 55 |
| 26 | 50 mg rac-Me₂C(1-indenyl)₂ZrCl₂ | 24,3 | 14 |
| 27 | 5 mg rac-Me₂Ge(1-indenyl)₂ZrCl₂ | 394 | 59 |

### Beispiel 28

Es wurde verfahren wie in Beispiel 18, zusätzlich wurden jedoch während der Polymerisation 50 g Ethylengas gleichmäßig zudosiert. Die Metallocenaktivität betrug 164 kg Copolymer/g Metallocen x h, die VZ des Polymers war 194 cm³/g. Das statistische Copolymer enthielt 5,6 % Ethylen.

### Beispiel 29

Es wurde verfahren wie in Beispiel 18, nach 30 Minuten Polymerisationszeit wurden jedoch 250 g Ethylen zugegeben.
Die Metallocenaktivität betrug 219 kg Copolymer/g Metallocen x h, die VZ des Polymers war 234 cm³/g. Das Blockcopolymer enthielt 19,5 % Ethylen.

### Beispiel 30

Es wurde verfahren wie in Beispiel 18, vor Zugabe des Propylens wurden in den Reaktor jedoch 48 Ndm³ Wasserstoff eindosiert.
Die Metallocenaktivität betrug 173 kg PP/g Metallocen x h, die VZ des Polypropylenwachses war 18 cm³/g.

### Beispiel 31

Ein trockener 24-dm³-Reaktor wurde mit Stickstoff gespült und mit 12 dm³ eines entaromatisierten Benzinschnitts mit dem Siedebereich 100 - 120°C gefüllt. Dann wurde der Gasraum des Reaktors durch 5-maliges Aufdrücken von 2 bar Ethylen und Entspannen stickstofffrei gespült.
Dann wurden 15 mmol Trimethylaluminium in 30 cm³ Toluol zugegeben und unter Rühren wurde der Reaktor innerhalb von 15 Minuten auf 60°C aufgeheizt und durch Zugabe von Ethylen wurde der Gesamtdruck auf 5 bar eingestellt.
Parallel dazu wurden 5 mg rac-Ethylen(2-methyl-1-indenyl)₂zirkondichlorid in 20 cm³ toluolischer Methylaluminoxanlösung (30 mmol MAO, mittlerer Oligomerisierungsgrad p = 14) aufgelöst und nach 15 Minuten Standzeit in den Reaktor gegeben. Bei 70°C wurde 1 h polymerisiert, wobei der Druck im System durch Nachdosieren von Ethylen bei 5 bar gehalten wurde.
Es wurden 395 g Polyethylen erhalten. Die VZ des Polyethylens betrug 305 cm³/g.

### Beispiel 32

Es wurde verfahren wie in Beispiel 18, statt der toluolischen Methylaluminoxanlösung wurde jedoch in gleicher Menge und Molarität eine Isobutylmethylaluminoxanlösung in Heptan verwendet.
Die Metallocenaktivität betrug 137,5 kg PP/g Metallocen x h und das Polymere hatte eine VZ von 159 cm³/g. Isobutylmethylaluminoxan wurde durch Umsetzung einer Mischung von Isobutyl AlMe₂ und AlMe₃ mit Wasser in Heptan erhalten und enthielt 9 Mol-% Isobutyl- und 91 Mol-% Methyl-Einheiten.

### Beispiel 33

Beispiel 18 wurde wiederholt, statt der toluolischen Methylaluminoxanlösung wurde jedoch in gleicher Menge und Molarität eine Hydridomethylaluminoxanlösung (hergestellt aus Me₂AlH und Wasser in Toluol) verwendet.
Die Metallocenaktivität betrug 119 kg PP/g Metallocen x h und das Polymere hatte eine VZ von 160 cm³/g.

### Beispiel 34

Es wurde verfahren wie in Beispiel 3, als Cokatalysator 1-Lösung wurden jedoch 34.5 ml einer Triisobutylaluminiumlösung in Heptan (26 mmol Al) verwendet. Die Reaktion wurde durch schnelles Abgasen des überschüssigen Monomeren beendet. Eine Stoppung der Polymerisation mit CO₂ muß im Falle von Triisobutylaluminium als Cokatalysator wegen der sich dabei bildenden Reaktionsprodukte mit unangenehmem Geruch unterbleiben. Alternativ ist aber, falls gewünscht, eine Stoppung der Reaktion beispielsweise mit einem Alkohol möglich. Es wurden 1.27 kg Polypropylen erhalten, entsprechend einer Metallocenaktivität von 254 kg PP/g Metallocen x h. Bezogen auf die eingesetzte Methylaluminoxanmenge war die Aktivität 63.5 g PP/mmol MAO und bezogen auf die Gesamt-Aluminium-Menge von Cokatalysator 1 und Cokatalysator 2 war die Aktivität 27.6 g PP/mmol Al. Die VZ des Polymeren war 62 cm³/g.

### Beispiel 35

Es wurde verfahren wie in Beispiel 8, als Cokatalysator 2 wurden jedoch 20 mmol Triisobutylaluminium verwendet (18.3 ml einer toluolischen Lösung). Die Stoppung der Polymerisation erfolgte mit 50 ml Ethanol. Es wurden 2.41 kg Polypropylen erhalten, entsprechend 480 kg PP/g Metallocen x h, 46 g PP/mmol MAO oder 33.5 g PP/mmol Gesamtaluminium. Die VZ des Polymeren war 51 cm³/g.

### Beispiel 36

Es wurde verfahren wie in Beispiel 35, als Metallocen wurden jedoch 10 mg rac-Me₂Si(2-Me-1-indenyl)₂ZrCl₂ verwendet. Die Polymerisationstemperatur war 50°C, die Stoppung der Polymerisation erfolgte durch schnelles Abgasen von übeschüssigem Monomeren. Es wurden 2.51 kg Polypropylen erhalten, entsprechend 251 kg PP/g Metallocen x h. Die VZ des Polymeren war 265 cm³/g.

### Beispiel 37

Es wurde verfahren wie in Beispiel 34, als Metallocen wurden jedoch 5 mg rac-Me₂Si(2-Me-1-indenyl)₂ZrCl₂ verwendet. Die Polymerisationstemperatur war 50°C, die Stoppung der Polymerisation erfolgte durch schnelles Abgasen von überschüssigem Monomeren. Es wurden 1.37 kg Polypropylen erhalten, entsprechend 274 kg PP/g Metallocen x h. Die VZ des Polymeren war 269 cm³/g.

### Beispiel 38

Es wurde verfahren wie in Beispiel 35, als Metallocen wurde jedoch 8.2 mg rac-Phenyl(Methyl)silyl(2-Me-4,6-diisopropyl-1-indenyl)₂ZrCl₂ verwendet, die Polymerisationstemperatur war 50°C und die Stoppung der Polymerisation erfolgte durch schnelles Abgasen von überschüssigem Monomer. Es wurden 3.12 kg Polypropylen erhalten, entsprechend 380 kg PP/g Metallocen x h. Die VZ des Polymeren war 573 cm³/g, die durch Gelpermeationschromatographie (GPC) bestimmte Molmasse war M_{w} = 777 000 g/mol.

### Vergleichsbeispiel 7

Es wurde verfahren wie in Beispiel 38, statt Triisobutylaluminium wurde jedoch in gleicher molarer Menge Methylaluminoxan verwendet. Die VZ des Polymeren war 478 cm³/g und M_{w} war 566 000 g/mol.

## Patentansprüche

1. Katalysatorsystem zur Olefinpolymerisation oder copolymerisation, dadurch gekennzeichnet, daß
es aus mindestens einem Metallocen ais Übergangsmetallverbindung einem Cokatalysator 1 und einem Cokatalysator 2 besteht,
wobei der Cokatalysator 1 aus
mindestens einer Verbindung der Formel II 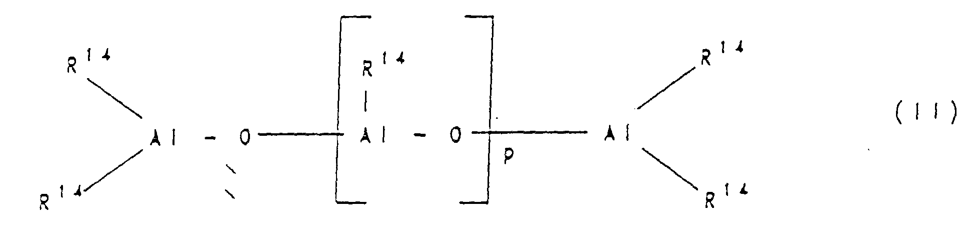 und/oder der Formel (III), 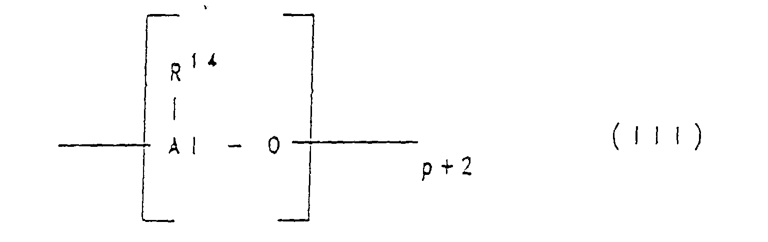 wobei in den Formeln II und III die Reste R¹⁴ gleich oder verschieden sein können und eine C₁-C₆-Alkylgruppe, eine C₆-C₁₈-Arylgruppe, Benzyl oder Wasserstoff bedeuten, und p eine ganze Zahl von 2 bis 50 bedeutet,
oder aus mindestens einer Verbindung der Formel IV besteht 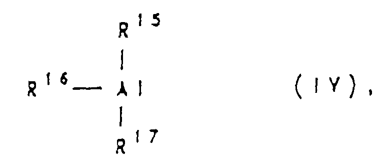 wobei R¹⁵, R¹⁶ und R¹⁷ gleich oder verschieden sind und ein Wasserstoffatom, eine C₁-C₁₀-Alkylgruppe, eine C₁-C₁₅-Alkylsilylgruppe, eine C₆-C₁₀-Arylgruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe, oder ein Halogenarom bedeuten,
und der Cokatalysator 2
aus mindestens einer Verbindung der Formel II und/oder der Formel III und/oder aus mindestens einer Verbindung der Formel IV besteht,
wobei das Katalysatorsystem mindestens eine Verbindung der Formel II und/ oder III und mindestens eine Verbindung der Formel IV enthält und der Cokatalysator 2 vor der Polymerisationsreaktion mit dem Metallocen in Kontakt gebracht wird.

2. Katalysatorsystem gemäß anspruch 1, dadurch gekennzeichnet, daß als Verbindung der Formel II oder III Methylaluminoxan verwendet wird.

3. Katalysatorsystem gemäß anspruch 1 oder 2, dadurch gekennzeichnet, daß als Verbindung der Formel IV Trialkylaluminium, Dialkylaluminiumhalogenid, Alkylaluminiumdihalogenid oder Dialkylaluminiumhydrid verwendet wird.

4. Katalysatorsystem gemäß einem oder mehreren der Ansprüche 1 bis 3, dadurch gekennzeichnet, daß als Verbindung der Formel IV Trimethylaluminium, Triisobutylaluminium, Diethylaluminiumhydrid, Diethylaluminiumchlorid, Dimethylaluminiumfluorid, Ethylaluminiumdichlorid oder Triethylaluminium verwendet wird.

5. Katalysatorsystem nach einem oder mehreren der Ansprüche 1 bis 4, dadurch gekennzeichnet, daß der Cokatalysator 2 auf einen anorganischen Träger wie Silikagele, Aluminiumoxide und festes Aluminoxan oder auf ein Polyolefinpulver in feinverteilter Form aufgebracht wird.

6. Katalysatorsystem nach einem oder mehreren der Ansprüche 1 bis 5, dadurch gekennzeichnet, daß das Metallocen mit einem Olefin vorpolymerisiert wird.

7. Verfahren zur Herstellung eines Olefinpolymers durch Polymerisation oder Copolymerisation eines Olefins der Formel R^{a}-CH =CH-R^{b}, worin R^{a} und R^{b} gleich oder verschieden sind und ein Wasserstoffatom oder einen Kohlenwasserstoffrest mit 1 bis 14 C-Atomen bedeuten, oder R^{a} und R^{b} mit den sie verbindenden Atomen einen Ring bilden können, bei einer Temperatur von -60 bis 200°C, bei einem Druck von 0,5 bis 100 bar, in Lösung, in Suspension oder in der Gasphase, in Gegenwart eines Katalysatorsystems, welches aus einem Metallocen als Übergangsmetallverbindung und einem Cokatalysator besteht, dadurch gekennzeichnet, daß das Katalysatorsystem gemäß einem oder mehreren der Ansprüche 1 bis 6 verwendet wird.

8. Verwendung eines Katalysatorsystems gemäß einem oder mehreren der Ansprüche 1 bis 6 als Katalysator bei der Olefinpolymerisation.

## Claims

1. A catalyst system for the polymerization or copolymerization of olefins which comprises
at least one metallocene as transition-metal compound
a cocatalyst 1 and
a cocatalyst 2,
where the cocatalyst 1 comprises
at least one compound of the formula II 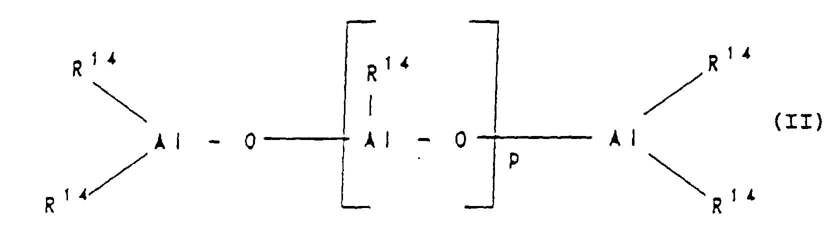 and/or of the formula (III) 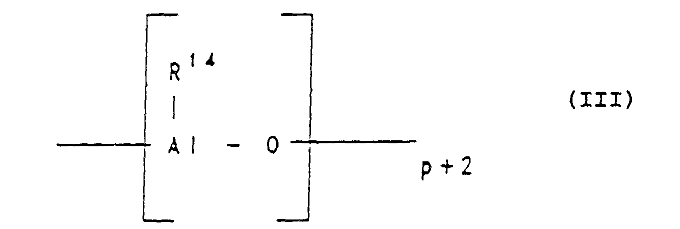 where, in the formulae II and III, the radicals R¹⁴ may be identical or different and are a C₁-C₆-alkyl group, a C₆-C₁₈-aryl group, benzyl or hydrogen, and p is an integer from 2 to 50,
or at least one compound of the formula IV 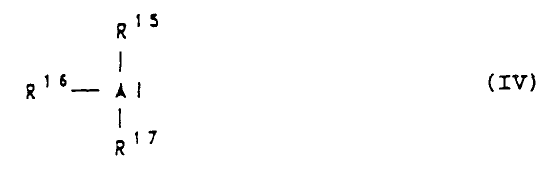 where R¹⁵, R¹⁶ and R¹⁷ are identical or different and are a hydrogen atom, a C₁-C₁₀-alkyl group, a C₁-C₁₅-alkylsilyl group, a C₆-C₁₀-aryl group, a C₂-C₁₀-alkenyl group, a C₇-C₄₀-arylalkyl group, a C₇-C₄₀-alkylaryl group, a C₈-C₄₀-arylalkenyl group or a halogen atom,
and the cocatalyst 2 comprises
at least one compound of the formula II and/or of the formula III and/or at least one compound of the formula IV, where the catalyst system comprises at least one compound of the formula II and/or III and at least one compound of the formula IV and the cocatalyst 2 is brought into contact with the metallocene before the polymerization reaction.

2. A catalyst system as claimed in claim 1, wherein the compound of the formula II or III is methylaluminoxane.

3. A catalyst system as claimed in claim 1 or 2, wherein the compound of the formula IV is trialkylaluminum, dialkylaluminum halide, alkylaluminum dihalide or dialkylaluminum hydride.

4. A catalyst system as claimed in one or more of claims I to 3, wherein the compound of the formula IV is trimethylaluminum, triisobutylaluminum, diethylaluminum hydride, diethylaluminum chloride, dimethylaluminum fluoride, ethylaluminum dichloride or triethylaluminum.

5. A catalyst system as claimed in one or more of claims 1 to 4, wherein the cocatalyst 2 is applied to an inorganic carrier such as silica gel, aluminum oxide or solid aluminoxane or to a polyolefin powder in finely divided form.

6. A catalyst system as claimed in one or more of claims 1 to 5, wherein the metallocene is prepolymerized with an olefin.

7. A process for the preparation of an olefin polymer by polymerization or copolymerization of an olefin of the formula R^{a}-CH=CH-R^{b}, in which R^{a} and R^{b} are identical or different and are a hydrogen atom or a hydrocarbon radical having 1 to 14 carbon atoms, or R^{a} and R^{b}, together with the atoms connecting them, can form a ring, at a temperature of from -60 to 200°C and a pressure of from 0.5 to 100 bar, in solution, in suspension or in the gas phase, in the presence of a catalyst system which comprises a metallocene as transition-metal compound and a cocatalyst, which comprises using the catalyst system as claimed in one or more of claims 1 to 6.

8. The use of a catalyst system as claimed in one or more of claims 1 to 6 as a catalyst in the polymerization of olefins.

## Revendications

1. Système catalyseur pour la polymérisation ou la copolymérisation des oléfines, caractérisé en ce qu'il est constitué d'au moins un métallocène comme composé d'un métal de transition, d'un cocatalyseur 1 et d'un cocatalyseur 2,
où le cocatalyseur 1 est constitué d'au moins un composé de formule (II) 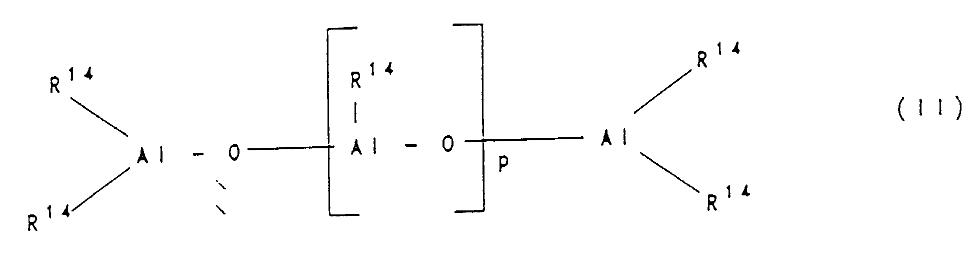 et/ou de formule (III) : 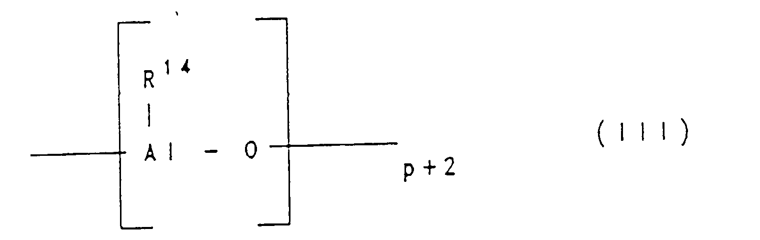 où, dans les formules (II) et (III), les radicaux R¹⁴ peuvent être identiques ou différents et représentent un groupe alkyle en C₁-C₆, un groupe aryle en C₆-C₁₈, le groupe benzyle ou un hydrogène, et p est un nombre entier de 2 à 50, ou d'au moins un composé de formule (IV) : 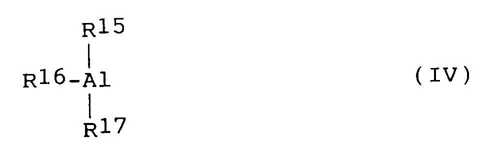 où R¹⁵, R¹⁶ et R¹⁷ sont identiques ou différents et représentent un atome d'halogène, un groupe alkyle en C₁-C₁₀, un groupe alkylsilyle en C₁-C₁₅, un groupe aryle en C₆-C₁₀, un groupe alcényle en C₂-C₁₀, un groupe arylalkyle en C₇-C₄₀, un groupe alkylaryle en C₇-C₄₀, un groupe arylalcényle en C₈-C₄₀ ou un atome d'halogène, et
le cocatalyseur 2 est constitué d'au moins un composé de formule (II) et/ou de formule (III) et/ou d'au moins un composé de formule (IV),
où le système catalyseur contient au moins un composé de formule (II) et/ou (III) et au moins un composé de formule (IV), et le cocatalyseur 2 est, avant la réaction de polymérisation, mis en contact avec le métallocène.

2. Système catalyseur selon la revendication 1, caractérisé en ce qu'on utilise comme composé de formule (II) ou (III) le méthylaluminoxane.

3. Système catalyseur selon la revendication 1 ou 2, caractérisé en ce qu'on utilise comme composé de formule (IV) un trialkylaluminium, un halogénure de dialkylaluminium, un dihalogénure d'alkylaluminium ou un hydrure de dialkylaluminium.

4. Système catalyseur selon l'une ou plusieurs des revendications 1 à 3, caractérisé en ce qu'on utilise comme composé de formule (IV) le triméthylaluminium, le triisobutylaluminium, l'hydrure de diéthylaluminium, le chlorure de diéthylaluminium, le fluorure de diméthylaluminium, le dichlorure d'éthylaluminium ou le triéthylaluminium.

5. Système catalyseur selon l'une ou plusieurs des revendications 1 à 4, caractérisé en ce que le cocatalyseur 2 est appliqué sous forme finement divisée sur un support minéral tel qu'un gel de silice, un oxyde d'aluminium ou un aluminoxane solide, ou encore sur une poudre de polyoléfine.

6. Système catalyseur selon l'une ou plusieurs des revendications 1 à 5, caractérisé en ce que le métallocène est prépolymérisé avec une oléfine.

7. Procédé de préparation d'un polymère oléfinique, par polymérisation ou copolymérisation d'une oléfine de formule R^{a}-CH=Ch-R^{b}, dans laquelle R^{a} et R^{b} sont identiques ou différents et représentent un atome d'hydrogène ou un résidu hydrocarboné ayant de 1 à 14 atomes de carbone, ou bien R^{a} et R^{b}, avec les atomes qui les relient, peuvent former un cycle, à une température de -60 à 200°C, sous une pression de 0,5 à 100 bar, en solution, en suspension ou en phase gazeuse, en présence d'un système catalyseur constitué d'un métallocène comme composé d'un métal de transition, et d'un cocatalyseur, caractérisé en ce qu'on utilise le cocatalyseur selon l'une ou plusieurs des revendications 1 à 6.

8. Utilisation d'un système cocatalyseur selon l'une ou plusieurs des revendications 1 à 6 comme cocatalyseur lors de la polymérisation d'oléfines.
